(19) Europäisches Patentamt
European Patent Office
Office européen des brevets

(11) Veröffentlichungsnummer: **0 272 535 B1**

(12) **EUROPÄISCHE PATENTSCHRIFT**

(45) Veröffentlichungstag der Patentschrift: **17.02.93**

(51) Int. Cl.5: **C08F 8/46**, C08F 8/44, C08C 19/30, C08F 8/36

(21) Anmeldenummer: **87118114.5**

(22) Anmeldetag: **08.12.87**

(54) **Polymere Emulgatoren auf Basis aminotelecheler Vinyloligomere II.**

(30) Priorität: **20.12.86 DE 3643818**

(43) Veröffentlichungstag der Anmeldung:
**29.06.88 Patentblatt 88/26**

(45) Bekanntmachung des Hinweises auf die Patenterteilung:
**17.02.93 Patentblatt 93/07**

(84) Benannte Vertragsstaaten:
**DE FR GB IT**

(56) Entgegenhaltungen:
**BE-A- 849 852**
**FR-A- 1 495 086**
**FR-A- 2 376 244**
**US-A- 2 647 146**

(73) Patentinhaber: **BAYER AG**

**W-5090 Leverkusen 1 Bayerwerk(DE)**

(72) Erfinder: **Schmidt, Adolf, Dr.**
**Roggendorfstrasse 67**
**W-5000 Köln 80(DE)**
Erfinder: **Hendricks, Udo, Dr.**
**Am Höhenfeld 12**
**W-5068 Odenthal(DE)**
Erfinder: **Bömer, Bruno, Dr.**
**Max-Planck-Strasse 53**
**W-5060 Bergisch-Gladbach 2(DE)**
Erfinder: **Ott, Karl-Heinz, Dr.**
**Paul-Klee-Strasse 54**
**W-5090 Leverkusen 1(DE)**
Erfinder: **Eichenauer, Herbert, Dr.**
**Goethestrasse 71**
**W-4047 Dormagen 1(DE)**
Erfinder: **Pischtschan, Alfred, Dr.**
**Zur Eiche 33**
**W-5067 Kürten(DE)**

**EP 0 272 535 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der Erfindung sind Sulfosuccinamidsäuren und ihre Salze der allgemeinen Formel

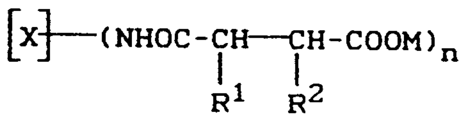 ,

die sich von endständige Aminogruppen enthaltenden Vinyloligomeren der Formel $[X]-(NH_2)_n$ ableiten, in denen

X für den Rest eines hydrophoben, gegebenenfalls verzweigten Vinyloligomers mit einem mittleren Molekulargewicht $\overline{M}_n$ von 200-5000, vorzugsweise 300-3000,

von den Resten

$R^1$ und $R^2$ der eine für Wasserstoff, der andere für $-SO_3M$,

n für eine Zahl von 1,4-3,0, vorzugsweise 1,6-2,3

M für Wasserstoff, ein Alkalimetall, eine Ammonium-$C_1$-$C_4$-Alkylammonium- oder $C_2$-$C_3$-Hydroxyalkyl-ammonium-Gruppe stehen.

Ein weiterer Gegenstand der Erfindung ist die Verwendung der Verbindungen der Formel I als Tenside und Emulgatoren in wäßrigen Systemen.

Beispiele für die X zugrunde liegenden Vinyloligomere sind:
Oligobutadiene und Oligoisoprene sowie die entsprechenden Produkte mit teilweise oder vollständig hydrierten Doppelbindungen, Oligomere aus Ethylen, Propen, Styrol, Vinylestern mit 2-4 C-Atomen im Carbonsäureteil, (cyclo)-aliphatische Ester der (Meth)acrylsäure mit 1-12 C-Atomen im Alkoholrest, Triethoxyvinylsilan oder Trimethylvinylsilan.

Beispiel für M sind Natrium, Kalium, Ammonium, Mono-, Di- oder Trimethylammonium, Mono-, Di- oder Tri-(hydroxyethyl)-ammonium und Mono- oder Di-(hydroxypropyl)-ammonium.

Die Verbindungen der Formel I werden nach an sich bekannten Verfahren hergestellt, indem man endständige Aminogruppen enthaltende Vinyloligomere der Formel

$$[X]-(NH_2)_n \qquad II,$$

in der
X und n die obengenannte Bedeutung haben, mit Maleinsäureanhydrid bei Temperaturen von 20-120 °C, vorzugsweise von 40-70 °C, und gegebenenfalls in Anwesenheit inerter Losungsmittel im Molverhältnis von mindestens 1:n umsetzt und anschließend die erhaltenen Reaktionsprodukte mit Alkali- oder Ammoniumsulfiten zur Reaktion bringt.

Die endständige Aminogruppen enthaltenden Vinyloligomere der Formel II, die im folgenden als aminotelechele Vinyloligomere bezeichnet werden sollen, sind bekannt.

Geeignete aminotelechele Oligomere sind beispielsweise die in der DOS 2 151 848 beschriebenen Produkte, soweit sie in Wasser unlöslich sind, aminotelechele Oligopropylene, Oligobutdiene, Oligoisoprene sowie aminotelechele Oligobutadiene und Oligoisoprene, deren Doppelbindungen teilweise oder vollständig hydriert wurden.

Die Herstellung solcher aminotelecheler Vinyloligomere ist bekannt. Sie erfolgt durch Polymerisation von Vinylmonomeren unter Verwendung großer Mengen nitrilhaltiger aliphatischer Azoinitiatoren, wobei Vinyloligomere mit endständigen Nitrilgruppen entstehen, die durch katalytische Hydrierung der Nitrilendgruppen zu primären Aminogruppen in die aminotelechelen Vinyloligomere der Formel II überführt werden.

Beispielsweise beschreibt die US-P 2 561 068 u.a. die Herstellung von Polybutadienen, Polyisoprenen und Polypropylenen mit niedrigem Molekulargewicht und ungefähr zwei Nitrilendgruppen durch Batchpolymerisation der entsprechenden Monomere unter Verwendung großer Mengen nitrilhaltiger aliphatischer Azoinitiatoren.

Die katalytische Hydrierung der Nitrilendgruppen solcher Produkte zu primären Aminoendgruppen ist in US-P 2 647 146 beschrieben. Aus der wachsartigen Konsistenz des im Beispiel 2 dieser Anmeldung hergestellten Diamins kann auf eine zumindest teilweise Hydrierung der Doppelbindungen des Oligobutadiens geschlossen werden.

Ferner sei zum Stand der Technik auf die belgische Patentschrift 849 852 hingewiesen. Aus dieser Schrift sind Sulfosuccinate bekannt, die mit primären Aminen der Formel R-$NH_2$ (R = $C_1$-$C_{22}$-Kohlenwasserstoffrest) gebildet worden sind. Es handelt sich also um primäre Monoamine, so daß die Reaktionsprodukte nur eine Bernsteinsäurefunktion enthalten.

Die Herstellung der nitriltelechelen Oligobutadiene oder Oligoisoprene erfolgt vorzugsweise kontinuierlich in einem gefluteten Rührautoklaven bei Drucken unter 25 bar. Das Molekulargewicht der Oligomeren kann über das Verhältnis Azodinitril-Initiator zu Monomer eingestellt werden. Als Azodinitril-Initiatoren können beispielsweise eingesetzt werden: 2,2′-Azo-bis-isobutyronitril (AIBN), 2,2′-Azo-bis-2-methylbutyronitril, 1,1′-Azo-dicyclopentan-carbonitril, 1,1′-Azodicyclohexancarbonitril, 2,2′-Azo-bis-cyclopentylpropionitril, 1,1′-Azo-dicamphercarbonitril, 2,2′-Azo-bis-(α-γ-dimethylvaleronitril),2,2′-Azo-bis-2-phenylpropionitril, 2,2′-Azo-bis-2-benzyl-propionitril und 2,2′-Azo-bis-2-(4-methoxyphenyl)-propionitril.

Bevorzugte Initiatoren sind AIBN, 2,2′-Azo-bis-2-methylbutyronitril und 2,2′-Azo-bis-(α,γ-dimethylvaleronitril).

Bei Verwendung von AIBN als Initiator liegen die bevorzugten Polymerisationstemperaturen bei 90-130 ° C und die mittleren Verweilzeiten bei 1-6 Stunden.

Selbstverständlich können geeignete nitriltelechele Oligobutadiene und Oligoisoprene auch diskontinuierlich nach einem Zulaufverfahren hergestellt werden. Die Hydrierung der Nitrilendgruppen erfolgt in an sich bekannter Weise durch katalytische Hydrierung des in einem Lösungsmittel wie z.B. Toluol gelösten Oligomeren. Zur selektiven Hydrierung der Nitrilgruppen ist beispielsweise Raney-Cobalt geeignet, wobei durch einen Zusatzvon $NH_3$ die Bildung von sekundären und tertiären Aminogruppen zurückgedrängt werden kann.

Der $H_2$-Druck beträgt vorzugsweise 100-200 bar und die Hydriertemperatur 100-200 ° C. Bei sehr langen Hydrierzeiten oder bei Zusatz von Raney-Nickel zum Raney-Cobalt gelingt auch die Hydrierung der C-C-Doppelbindungen der Oligobutadiene bzw. Oligoisoprene.

Die Herstellung aminotelecheler Oligostyrole, aminotelecheler Oligoethylene, aminotelecheler Oligoacrylsäureethylester, eines aminotelechelen Oligomethacrylsäuremethylesters, eines aminotelechelen Oligomethacrylsäureethylesters sowie eines aminotelechelen Oligovinylacetats ist in den Beispielen der DOS 2 151 848 beschrieben. Die Herstellung der nitriltelechelen Vorprodukte erfolgt dabei nach den Verfahren der DOS 2 030 589. Außerdem wurde die Herstellung von dienitriltelechelen Oligostyrolen ausführlich von Konter, Bömer, Köhler und Heitz in Makromol, Chem. 182 (1981) 2619-2632 beschrieben.

Geeignete Lösungsmittel für die Umsetzung der aminotelechelen Vinyloligomere der Formel II mit Maleinsäureanhydrid sind beispielsweise aliphatische oder aromatische Kohlenwasserstoffe, insbesondere Toluol und Xylol, aliphatische oder aromatische Halogenkohlenwasserstoffe, wie z.B. Methlenchlorid, Ethylenchlorid oder Chlorbenzol, Ester oder Ketone, wie z.B. Ethylacetat oder Aceton, und Ether, wie z.B. Tetrahydrofuran.

Vorzugsweise werden die aminotelechelen Vinyloligomere in den Lösungsmitteln gelöst und das Maleinsäureanhydrid diesen Lösungen bei der gewählten Reaktionstemperatur zugesetzt.

Das Mengenverhältnis der Komponenten wird so gewählt, daß auf jedes Amin-Äquivalent der aminotelechelen Vinyloligomere mindestens ein Äquivalent Maleinsäureanhydrid entfällt, gegebenenfalls kann Maleinsäureanhydrid in geringem Überschuß eingesetzt werden.

Bei der Reaktion der Maleinsäureanhydrid-Umsetzungsprodukte mit Alkali- oder Ammoniumsulfit wird die Menge an Alkali- oder Ammoniumsulfit so gewählt, daß pro Mol eingesetztes Maleinsäureanhydrid 0,95-1,05 Mol Alkali- oder Ammoniumsulfit zur Anwendung gelangen.

Die polymeren Emulgatoren werden in Mengen von 0,2 bis 20 Gew.-%, vorzugsweise 1 bis 10 Gew.-%, bezogen auf die Monomermenge eingesetzt.

Sie eignen sich beispielsweise für die Emulsionspolymerisation von Butadien, Isopren, Chloropren, Styrol und im aromatischen Kern substituierten Styrolen, α-Methylstyrol, (Meth)acrylsäureestern mit 1 - 20 C-Atomen im Alkoholrest, Vinylestern mit 2 - 10 C-Atomen im Carbonsäurerest, Ethylen, Vinylchlorid, Vinylidenchlorid, Acrylnitril und Methacrylnitril sowie für die Emulsionscopolymerisation geeigneter Kombinationen der vorgenannten Monomeren. Zur zusätzlichen Stabilisierung der Emulsionen können ferner untergeordnete Mengen (ca. 0,1 bis 10 Gew.-%) von (Meth)acrylsäure, (Meth)acrylamid, Maleinsäure, Itaconsäure, Vinylsulfonsäure, Methallylsulfonsäure, Vinylphosphonsäure oder Acrylamido-2-methylpropansulfonsäure (AMPS) eingebaut werden. Vorzugsweise werden die erfindungsgemäßen polymeren Emulgatoren eingesetzt zur Polymerisation von Butadien, Isopren und Chloropren, sowie zur Copolymerisation von Butadien-Styrol, Butadien-Acrylnitril, Ethylen-Vinylacetat, Ethylen-Vinylchlorid, Styrol, Butylacrylat und Styrol-Acrylnitril.

Zur Herstellung von Polybutadienlatices, die als Pfropfgrundlagen für die Herstellung schlagfester Thermoplaste vom ABS-Typ besonders geeignet sind, werden solche polymeren Emulgatoren (besonders)

bevorzugt eingesetzt, deren Rest X aus Polybutadien, Polyisopren bzw. Polyisopren oder Polybutadien, dessen Doppelbindungen teilweise oder vollständig hydriert sind, bestehen.

Herstellungsbeispiele 1-4

Polymerisation von Butadien bzw. Isopren

Ein 6 1-Rührautoklav mit Druckhalteventil wird mit Toluol vollständig gefüllt und auf 120 °C Innentemperatur erwärmt. Bei dieser Temperatur werden stündlich die in der Tabelle angegebenen Mengen flüssiges Butadien bzw. Isopren sowie eine Toluollösung, die 40 g Azoisobuttersäurenitril (AIBN) pro Liter enthält, zugepumpt.

Das Druckhalteventil wird auf 16-18 bar eingestellt. Nach einer Anfahrphase von 8 Stunden wird die aus dem Autoklaven austretende Lösung vom Restmonomer befreit und im Vakuum eingedampft.

| Herstellungsbeispiel-Nr. | 1 | 2 | 3 | 4 |
|---|---|---|---|---|
| Butadien [ml/h] | 750 | 1500 | - | - |
| Isopren [ml/h] | - | - | 750 | 1500 |
| AIBN-Lösung [ml/h] | 2250 | 1500 | 2250 | 1500 |
| Ausbeute [g/h] | 360 | 580 | 385 | 630 |
| Stickstoffgehalt [%] | 4,0 | 1,6 | 3,9 | 1,6 |
| $\bar{M}_n$ aus N | 700 | 1750 | 720 | 1750 |
| $\bar{M}_n$ aus Dampfdruckosmose in Toluol | 730 | 1680 | 750 | 1790 |

Herstellungsbeispiele 5-8

Herstellung der aminotelechelen Oligomere durch Hydrierung der Nitrilendgruppen

In einem 4 l-Autoklaven werden jeweils 750 g dinitriltelecheles Oligomer, 2000 ml Toluol, 375 ml flüssiges Ammoniak und 75 g Raney-Cobalt vorgelegt und bei 200 °C und 100 bar Wasserstoffdruck 10 Stunden hydriert.

Nach dem Abfiltrieren des Katalysators wird das Toluol im Vakuum entfernt.

| Herstellungsbeispiel-Nr. | 5 | 6 | 7 | 8 |
|---|---|---|---|---|
| Oligobutadien aus Beispiel-Nr. | 1 | 2 | - | - |
| Oligoisopren aus Beispiel-Nr. | - | - | 3 | 4 |
| Ausbeute [g] | 740 | 730 | 755 | 725 |
| Gesamtstickstoff [%] | 3,9 | 1,5 | 3,7 | 1,55 |
| Basenstickstoff [%] | 3,2 | 1,49 | 3,5 | 1,55 |
| primärer Stickstoff [%] | 2,9 | 1,45 | 3,3 | 1,45 |
| sekundärer Stickstoff [%] | 0,2 | 0,03 | 0,15 | 0,08 |
| tertiärer Stickstoff [%] | 0,1 | 0,01 | 0,05 | 0,02 |
| $\bar{M}_n$ aus N gesamt | 740 | 1870 | 760 | 1800 |

Beispiel 9

360 Tle. eines aminotelechelen Oligobutadiens, hergestellt nach Herstellungsbeispiel 5 (Basen-Stickstoff 3,2 %, $\overline{M}_n$ 740) wurden in 350 Tln. Toluol gelöst und bei 50-60° C portionsweise mit 87 Tln. Maleinsäureanhydrid versetzt und bei 60-70° C eine Stunde gerührt. Nach dem Abdestillieren des Toluols unter Vakuum erhielt man 447 Tle. eines viskosen, dunkelbraunen Rückstands, der eine Säurezahl von 114 mg KOH/g besaß. Das IR-Spektrum zeigte das Vorliegen einer Säureamidgruppe. Der Eindampfrückstand wurde bei 60-70° C mit einer Lösung von 113 Tln. Natriumsulfit in 810 Tln. Wasser versetzt und 7 Stunden bei gleicher Temperatur gerührt. Die entstandene wäßrige Lösung bei gleicher Temperatur gerührt. Die entstandene wäßrige Lösung wurde durch Filtration unter Zusatz von Kieselgur geklärt. Man erhielt eine klare bräunliche Lösung mit einem Trockengehalt von 40 %, die sich in Wasser klar löste.

Der durch dreistündiges Erhitzen im Vakuum bei 100° C erhaltene Eindampfrückstand besaß einen Stickstoffgehalt von 2,4 % und einen Schwefelgehalt von 5,2 %.

Beispiel 10

120 Tle. eines aminotelechelen Oligobutadiens, hergestellt nach Herstellungsbeispiel 6 (Basen-Stickstoff 1,49 %, $\overline{M}_n$ 1870) wurden wie in Beispiel 9 beschrieben, in Toluol mit 14 Tln. Maleinsäureanhydrid umgesetzt. Die Säurezahl des Umsetzungsproduktes nach dem Eindampfen betrug 59,7 mg KOH/g. Der Eindampfrückstand wurde mit 90 Tln. Isopropanol gelöst, bei 50-60° C mit einer Lösung von 18,9 Tln. Natriumsulfit in 100 Tln. Wasser versetzt und 3 Stunden bei 60-70° C gerührt. Anschließend wurde durch Eindampfen im Vakuum das Isopropanol entfernt. Man erhielt eine viskose, weißliche Emulsion mit einem Trockengehalt von 45 %, die in Wasser opalescirende Lösungen lieferte.

Beispiele 11

120 Tle. eines aminotelechelen Oligoisoprens, hergestellt nach Herstellungsbeispiel 8 (Basen-Stickstoff 1,55 % $\overline{M}_n$ 1800) wurden, wie in Beispiel 9 beschrieben, in Toluol mit 14,7 Tln. Maleinsäueanhydrid umgesetzt. Die Säurezahl des Umsetzungsproduktes nach dem Eindampfen betrug 63,1 mg KOH/g. Der Eindampfrückstand wurde mit 60 Tln. Ethanol und 60 Tln. 10 %iger Natronlauge gelöst und dann bei 50-60° C mit 43 Tln. einer 36,3 %igen wäßrigen Natriumhydrogensulfit-Lösung versetzt. Nach Zusatz von 100 Tln. Wasser wurde 3 Stunden bei 70-80° C gerührt. Anschließend wurde durch Eindampfen im Vakuum vom Ethanol befreit. Man erhielt eine weiße Paste mit einem Trockengehalt von 73 %, die in Wasser emulsionsartige Lösungen lieferte.

Beispiel 12

360 Tle. eines aminotelechelen Oligoisoprens, hergestellt nach Herstellungsbeispiel 7 (Basen-Stickstoff 3,5 %, $\overline{M}_n$ 760) wurden wie in Beispiel 9 beschrieben, mit 96,9 Tln. Maleinsäureanhydrid umgesetzt. Die Säuerzahl des Umsetzungsproduktes nach dem Eindampfen betrug 115 mg KOH/g. Der Eindampfrückstand wurde mit einer Lösung von 132 Tln. Natriumsulfit in 690 Tln. Wasser versetzt und bei 60-70° C 7 Stunden gerührt. Die entstandene wäßrige Lösung wurde durch Filtration unter Zusatz von Kieselgur geklärt. Man erhielt eine bräunliche, klare Lösung mit einem Trockengehalt von 45 %, die sich in Wasser klar löste.

Der durch dreistündiges Erhitzen im Vakuum bei 100° C erhaltene Eindampfrückstand besaß einen Stickstoffgehalt von 2,2 % und einen Schwefelgehalt von 5,6 %.

Beispiele 13-16

Allgemeine Polymerisationsvorschrift

In einen 6 l-Autoklav mit Blattrührer (150 UPM) und Außenmantelheizung mit geregelter Innentemperatur werden unter Ausschluß von Luftsauerstoff eingebracht:

| | |
|---|---|
| Entionisiertes Wasser | 1850 g |
| Polymeremulgator, 10 %ige wäßrige Lösung | 640 g |
| tert.-Dodecylmercaptan | 5 g |
| 4,4'-Azo-bis-(4-Cyanopentansaures Kalium) | 5 g |
| gelöst in entionisiertem Wasser | 80 g |
| Butadien | 1600 g |

Der Autoklaveninhalt wird auf eine Innentemperatur von 65° C aufgeheizt und bei dieser Temperatur konstant gehalten, bis der Druck von ca. 7 bar auf ca. 1,5 bar abgefallen ist. Der Autoklav wird oben langsam entspannt, das entweichende Butadien entsorgt, der Latex abgelassen und anschließend entmonomerisiert; indem man ca. 10 % des im Latex enthaltenen Wassers abdestilliert und gleichzeitig durch frisches Wasser ergänzt.

| Beispiel Nr. | Emulgator von Beispiel Nr. | Feststoff [Gew.-%] | Ausfall [g] | Teilchengröße[a)] [nm] | Auslaufzeit[b)] [sec.] | Elektr. Leitfähigkeit [ms] |
|---|---|---|---|---|---|---|
| 13 | 9 | 42,5 | kein | 69 | 36 | 4,7 |
| 14 | 10 | 35 | ~ 36 | 98 | 16,5 | 1,4 |
| 15 | 11 | 40 | 25 | 100 | 20,7 | 2,1 |
| 16 | 12 | 38,4 | 6 | 60 | 30,2 | 3,2 |

a) Durch Trübungsmessung ermittelt (entspricht $D_{AV}$ siehe DIN 53 206)

b) Auslaufbecher nach DIN 53 211, 4 mm Düse bei 25°C

Beispiele 17 und 18

Pfropfpolymerisation von Styrol/Acrylnitril-Gemischen auf die gemäß Beispiel 14 und 16 hergestellten Polybutadienlatices

50 Gew.-Teile Polybutadien (der nach Verdünnung mit Wasser auf einen Feststoffgehalt von 25 Gew.-% eingestellte Polybutadienlatex aus Beispiel 14 bzw. 16) werden unter Stickstoff auf 65° C erwärmt, wonach 0,5 Gew.-Teile Kaliumpersulfat (gelöst in 15 Gew.-Teilen Wasser) zugegeben werden. Anschließend werden ein Gemisch aus 36 Gew.-Teilen Styrol und 14 Gew.-Teilen Acrylnitril sowie 2 Gew.-Teile des Natriumsalzes der disproportionierten Abietinsäure (gelöst in 25 Gew.-Teilen Wasser) innerhalb 4 Stunden zudosiert, wobei die Pfropfreaktion erfolgt.

| Beispiel Nr. | Latex aus Bsp. Nr. | Emulgator aus Bsp. Nr. | Ausfall [%] |
|---|---|---|---|
| 17 | 14 | 10 | 0 |
| 18 | 16 | 12 | 0,18 |

Der Latex wird in einer Magnesiumsulfat/Essigsäure-Lösung koaguliert und das resultierende Pulver bei 70° C im Vakuum getrocknet.

Beispiele 19 und 20

Ausprüfung von Abmischungen der unter Beispiel 17 und 18 beschriebenen Pfropfpolymerisate mit einem Styrol/Acrylnitril-Copolymerisat

40 Gew.-Teile des unter Beispiel 17 bzw. 18 beschriebenen Pfropfpolymerisats wurden mit 60 Gew.-Teilen eines Styrol/Acrylnitril-Harzes (72:28, $M_w$ ca. 115.000; $M_w/M_n$ - 1 ≦ 2), 2 Gew.-Teilen Ethylendiaminbisstearylamid und 0,1 Gew.-Teilen eines Silikonöls in einem Innenkneter vermischt und anschließend durch Spritzguß zu Platten mit den Maßen 40x60x2 verarbeitet. Die Platten wurden hinsichtlich Rohton und Oberflächenglanz beurteilt, wobei die Glanzbeurteilung nach der Skala A-H gemäß DE-AS 2 420 358 erfolgte.

| Beispiel | Verarbeitungstemperatur | Rohton | Glanzstufe |
|---|---|---|---|
| 19 | 240° C | hell | E |
| | 260° C | hell | E |
| | 280° C | gelb | E-F |
| 20 | 240° C | hell | D |
| | 260° C | hell | E |
| | 280° C | hell | E |

## Patentansprüche

**1.** Sulfosuccinamidsäuren und ihre Salze der allgemeinen Formel

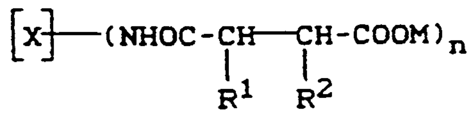

die sich von endständige Aminogruppen enthaltenden Vinyloligomeren der Formel

$$[X]-(NH_2)_n$$

ableiten
in denen
- X für den Rest eines hydrophoben, gegebenenfalls verzweigten Vinyloligomers mit einem mittleren Molekulargewicht $\overline{M}_n$ von 200-5000,

von den Resten
- $R^1$ und $R^2$ der eine für Wasserstoff, der andere für $-SO_3M$,
- n für eine Zahl von 1,4-3,0,
- M für Wasserstoff, ein Alkalimetall, eine Ammonium-, $C_1$-$C_4$-Alkylammonium- oder $C_2$-$C_3$-Hydroxyalkyl-ammonium-Gruppe stehen.

**2.** Sulfosuccinamidsäuren und ihre Salze gemäß Anspruch 1, worin X den Rest eines Oligobutadiens oder -isoprens und M Natrium bedeutet.

**3.** Verwendung der Verbindungen der Formel I als Tenside und Emulgatoren in wäßrigen Systemen.

## Claims

**1.** Sulfosuccinamido acids and salts thereof corresponding to the following general formula

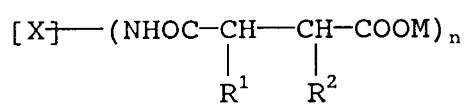

which are derived from amino-terminated vinyl oligomers corresponding to the following formula

$$[X]-(NH_2)_n$$

in which
- X is the residue of a hydrophobic, optionally branched vinyl oligomer having an average molecular weight $\overline{M}_n$ of 200 to 5,000,

of the substituents
- $R^1$ and $R^2$, one is hydrogen and the other $-SO_3M$,
- n is a number of 1.4 to 3.0,
- M is hydrogen, an alkali metal, an ammonium, $C_{1-4}$ alkyl ammonium or $C_{2-3}$ hydroxyalkyl ammonium group.

**2.** Sulfosuccinamido acids and salts thereof as claimed in claim 1, in which X is the residue of an oligobutadiene or isoprene and M is sodium.

3. The use of the compounds corresponding to formula I as surfactants and emulsifiers in aqueous systems.

**Revendications**

1. Sulfosuccinamido-acides et leurs sels, de formule générale

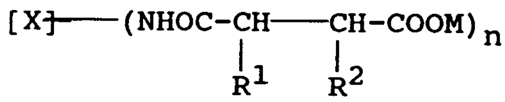

qui sont dérivés d'oligomères vinyliques contenant des groupes amino terminaux, de formule

$$[X]-(NH_2)_n$$

formules dans lesquelles

X représente le reste d'un oligomère vinylique hydrophobe éventuellement ramifié ayant un poids moléculaire moyen $\overline{M}_p$ de 200 à 5000,

l'un des restes

$R^1$ et $R^2$ représentent l'hydrogène et l'autre est un groupe $-SO_3M$,

n est un nombre de 1,4 à 3,0,

$\overline{M}$ est l'hydrogène, un métal alcalin, un groupe ammonium, (alkyle en $C_1$ à $C_4$)ammonium ou (hydroxyalkyle en $C_2$ ou $C_3$)-ammonium.

2. Sulfosuccinamido-acides et leurs sels suivant la revendication 1, dans lesquels X représente le reste d'un oligobutadiène ou d'un oligo-isoprène et M est le sodium.

3. Utilisation des composés de formule I comme agents tensio-actifs et émulsionnants dans des systèmes aqueux.